# EUROPEAN PATENT SPECIFICATION

(11) **EP 1 914 092 B1**
(45) Date of publication and mention of the grant of the patent: **01.12.2010**
(21) Application number: 06768033.0
(22) Date of filing: 10.07.2006
(51) Int. Cl.: B60C 11/117, B60C 11/03, B60C 11/04, B60C 11/13

(54) **TIRE FOR CONSTRUCTION VEHICLE**
REIFEN FÜR BAUFAHRZEUG
PNEUMATIQUE POUR ENGIN DE CHANTIER

(30) Priority: 08.08.2005 JP 2005229135
(43) Date of publication of application: 23.04.2008
(73) Proprietor: Bridgestone Corporation, Tokyo 104-8340 (JP)
(72) Inventor: INOUE, Takumi, Kodaira-shi, Tokyo 1878531 (JP)
(74) Representative: Whalley, Kevin
(86) International application number: PCT/JP2006/313671
(87) International publication number: WO 2007/018009

(56) References cited:
- JP-A- 11 034 615
- JP-A- 2000 233 610
- JP-A- 2001 055 017
- JP-A- 2001 277 816
- JP-A- 2003 205 706
- JP-A- 2004 155 335
- JP-A- 2004 224 268
- JP-A- 2004 262 295

## Description

### TECHNICAL FIELD

The present invention relates to a tire for a construction vehicle having improved heat-radiation characteristics.

### RELATED ART

Heretofore, widely used is a construction vehicle tire used for a construction vehicle and having a so-called lug pattern in which multiple lug grooves are disposed with given spaces therebetween. In the construction vehicle tire, common measure for improving its wear resistance are increasing a tread volume by using a tread rubber with a good wear, increasing a tread gage by deepening the groove, enhancing the rigidity of the land portion by decreasing a negative rate and the like.

However, when any of the above-mentioned measures is used to improve the wear resistance, a heat-generating characteristic of the tread portion is apt to be deteriorated, especially during the tire is rotated under a load. Such deterioration of the heat-generating characteristic may become a problem that it may cause a trouble such as a head separation in the tread portion.

Particularly, the land portion between two straight lines running along the circumferential direction of the tire formed by connecting terminal ends of the lug grooves substantially in the circumferential direction of the tire has a less area for heat-radiation, so that generated heat tends to have a higher temperature and thus the above-mentioned problem becomes more serious.

As a countermeasure for this problem, a technique in which the decreases of the tread volume as well as the rigidity of the land portion are suppressed to a minimum and a narrow groove having the width not more than 20 mm is disposed on the land portion to increase the area for heat-radiation has been developed recently (see, for example, Patent Documents 1 and 2).

However, the tire has been getting larger in its size, lower in its profile and greater in its load capacity along with upsizing of a construction vehicle, particularly, so that the deterioration of the heat-generating characteristic of the tread portion tends to be more and more obvious. Thus, it is still regarded important to suppress the heat generation of the tire center portion which leads to the above-mentioned problem.
Patent Document 1: Japanese Patent Application Laid-open No. 213,120/2001
Patent Document 2: Japanese Patent Application Laid-open No. 233,610/2000

### DISCLOSURE OF THE INVENTION

### PROBLEMS TO BE SOLVED BY THE INVENTION

In view of the above-mentioned facets, an object of the present invention is to provide a tire for a construction vehicle which suppresses a trouble of the tire by enhancing a heat-radiation characteristic of a tire center portion.

### MEANS FOR SOLVING THE PROBLEM

The invention recited in claim 1 is a tire for a construction vehicle provided with a plurality of lug grooves in tread shoulder regions located at the both sides in the width direction of the tire, wherein a plurality of widthwise-extending narrow grooves extending generally along the width direction of the tire are disposed in a tire center portion, at least one end of the each widthwise-extending narrow groove locates in the tread, and an equatorial shallow groove extending in the circumferential direction of the tire is disposed at least on the tire equator.

A rubber having given characteristics is used as a rubber constituting the tread rubber. The width and the depth of the equatorial shallow groove are those allowing the heat generation of the center portion to be suppressed during the period from a brand-new tire to the early stage of use where the head generation of the tread portion is considerable.

The term "in the tread" as used herein refers to inside of a tread end in the width direction of the tire, and the "tread end" refers to an outermost grounding portion in the width direction of the tire under a condition where a pneumatic tire is mounted on a standard rim specified in JATMA YEAR BOOK (Japan Automobile Tire Manufacturers Association Standard, 2002 Edition) and is inflated with 100% of a air pressure (maximum air pressure) corresponding to a maximum load capacity for an applied size and ply rating defined in JATMA YEAR BOOK (the load indicated in bold face in a corresponding table of the internal pressure vs. load capacity) and is loaded the maximum load capacity. It is noted that where the TRA standard or the ETRTO standard is adopted in the place of use or manufacturing, the above-mentioned definition follows such standard.

In addition, the tread shoulder refers to a region between the terminal end of the lug groove and the tread end.

Further, the tire center portion refers to a region between the terminal ends of the lug groove opposing across the tire equatorial plane.

As described above, in the invention recited in claim 1, the equatorial shallow groove extending in the circumferential direction of the tire is disposed at least on the tire equator, so that a compressive stress acting on the tire center portion can be relaxed and the area for hear-radiation can be increased. Accordingly, there is provided a tire for a construction vehicle which can effectively suppress the temperature rise in the tread portion during the rotation of the tire under load and thus can prevent the cause of a tire trouble such as heat separation. This effect can be significantly observed even in the case where a main groove having the depth of 70 mm or more is formed.

More over, the plurality of the above-mentioned widthwise-extending narrow grooves having at least one end terminating in the tread are disposed in the tire center portion, so that it is possible improve the wear resistance by suppressing the decrease of the rigidity of the land portion, as well as to enhance the heat-radiation characteristic by increasing the number of the above-mentioned widthwise-extending narrow grooves or by disposing the above-mentioned widthwise-extending narrow grooves in the position spaced from the lug groove where the temperature is maximized. Accordingly, as compared with the case where narrow grooves connecting the ends of the lug grooves are formed across the tire equator, an advantageous effect can be exerted in term of enhancing the heat-radiation characteristic.

When the tire has a profile of 90% or less, the tension borne by the belt is greater than that of the tire having a profile of 95%, which is commonly used. Thus, since more heat is generated form the tread portion, the present invention can be adopted more effectively.

Further, when a coefficient in correspondence with a maximum speed in the tire load capacity correspondence chart defined in TRA is not less than 1.4, the load relative to the volume of air in the tire is increased to generate more heat from the tread portion. Thus, the present invention can be advantageously applied.

The invention recited in claim 2 is **characterized in that** the tire is further provided with non-equator narrow grooves extending along each of the two straight lines circumferentially connecting the terminal end position of the lug grooves in the tread.

This characteristic serves to decrease the temperature of the tire center portion in such a tire that wear due to a slip in the width direction is reduced while sideslip resistance is assured and the narrow grooves do not deteriorate the rigidity in the width direction.

The invention recited in claim 3 is **characterized in that** the width of the widthwise-extending narrow groove is within a range from 4 mm to 20 mm.

When the width of the widthwise-extending narrow groove is less than 4 mm, the effect of enhancing the heat-radiation characteristic is difficult to be sufficiently exerted. On the other hand, when it is more than 20 mm, the block rigidity of the tire center portion is decreased and thus problems of irregular wear and tread chipping are apt to easily occur.

The invention recited in claim 4 is **characterized in that** the groove depth of the widthwise-extending narrow groove is within a range from 50% to 95% of the groove depth of the lug groove.

When the groove depth of the widthwise-extending narrow groove is less than 50% of that of the lug groove, the heat-radiation effect cannot be sufficiently obtained. On the other hand, when it is more than 95%, the tread rigidity of the tire center portion is decreased and thus problems of irregular wear and tread chipping are apt to easily occur.

The invention recited in claim 5 is **characterized in that** the groove width of the equatorial shallow groove is within a range from 30 mm to 50 mm.

This is because, when the width of the equatorial shallow groove is less than 30 mm, the effect of relaxing the compression stress acting on the tire center portion during the rotation of the tire under load tends to be not sufficiently exerted. On the other hand, when the width of the equatorial shallow groove is more than 50 mm, the grounding area of the tire center portion is excessively decreased to often result in an increase of a ground contact pressure in the tread side region, which tends to cause a trouble at the belt ends.

The invention recited in claim 6 is **characterized in that** the groove depth of the equatorial shallow groove is within a range from 10% to 25% of the groove depth of the lug groove.

This is because, when the groove depth of the equatorial shallow groove is less than 10% of the groove depth of the lug groove, the heat-radiation effect cannot be sufficiently obtained. On the other hand, when it is more than 25%, the wear resistance is likely deteriorated due to the decrease of the tread volume.

The invention recited in claim 7 is **characterized in that** the negative rate in the region extending over 25% of the tread width with the tire equator being its center except for the equatorial shallow groove is within a range from 2% to 8%.

This may reduce the heat generation effectively without diminishing the wear resistance of the tire center portion.

The invention recited in claim 8 is **characterized in that** the widthwise-extending narrow groove is a curved groove which has an incline angle with respect to the width direction of the tire gradually decreasing as the narrow groove approaches the non-equatorial narrow groove. Such widthwise-extending narrow groove may enhance the heat-radiation characteristic without deteriorating the block rigidity since an intersection between the widthwise-extending narrow groove and the non-equatorial narrow groove forms an obtuse angle.

The invention recited in claim 9 is **characterized in that** the widthwise-extending narrow groove is a zigzag-shaped groove having an incline angle with respect to the width direction of the tire which is smaller at the vicinity of the non-equatorial narrow groove than at the vicinity of the equatorial plane of the tire. Such widthwise-extending narrow groove may enhance the heat-radiation characteristic without deteriorating the block rigidity since an intersection between the widthwise-extending narrow groove and the non-equatorial narrow groove forms an obtuse angle.

The invention recited in claim 10 is **characterized in that** both ends of the widthwise-extending narrow groove locate in the tire equatorial plane side with respect to the inner ends of the lug groove as viewed in the width direction of the tire, and are connected to the non-equatorial narrow groove. This configuration of the widthwise-extending narrow groove and the non-equatorial narrow groove may reduce the temperature of the entire tread since the surface areas of these grooves are increased.

### EFFECT OF THE INVENTION

According to the present invention, it is possible to provide a tire for a construction vehicle which suppresses a trouble of the tire by enhancing a heat-radiation characteristic of a tire center portion.

### BRIEF DESCRIPTION OF THE DRAWINGS

FIG. 1 is a sectional view of a tire for a construction vehicle in the radial direction of the tire according to the first embodiment.
FIGS. 2(A) and 2(B) are a plane view and a sectional view in the radial direction, respectively, of the tire for a construction vehicle according to the first embodiment.
FIG. 3 is a plane view of a tire for a construction vehicle in the radial direction of the tire according to the second embodiment.
FIG. 4 is a plane view of a tire for a construction vehicle in the radial direction of the tire according to the third embodiment.
FIG. 5 is a plane view of a tire for a construction vehicle in the radial direction of the tire according to the forth embodiment.
FIG. 6 is a plane view of a tire for a construction vehicle in the radial direction of the tire according to the fifth embodiment.

### BEST MODE FOR CARRYING OUT THE INVENTION

In the next, modes for carrying out the present invention will be discussed with reference to embodiments. In the descriptions regarding the second and later embodiments, like reference numerals refer to like part as previously described and description thereof is omitted.

### [First Embodiment]

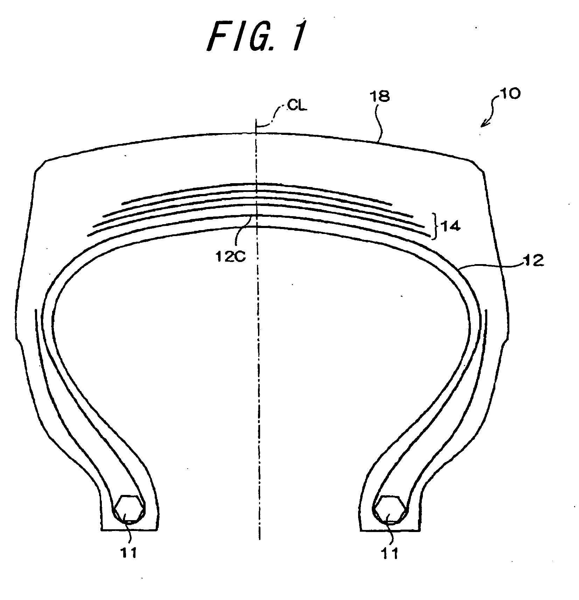

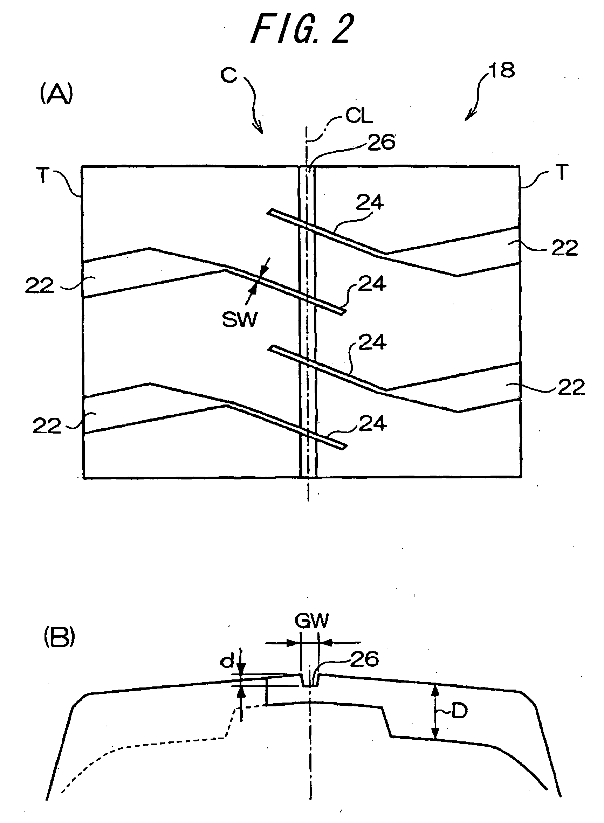

First, the first embodiment will be discussed. As shown in FIGS. 1 and 2, a tire 10 for a construction vehicle according to the present embodiment has a carcass 12 of which both end portions are turned around bead cores 11. The carcass 12 is composed of one or more ply layers.

A belt layer 14 configured by laminating a plurality of belt plies is embedded outside of a crown portion 12C of the carcass 12 in the radial direction of the tire, and a tread portion 18 provided with grooves is formed outside of the belt layer 14 in the radial direction of the tire. A rubber having given characteristics is used as a rubber constituting the tread rubber.

A plurality of lug grooves 22 are disposed in tread shoulder regions which is the both sides in the width direction of the tire.

In addition, a plurality of widthwise-extending narrow grooves 24 extending generally along the width direction of the tire are disposed in the tire center portion C. The widthwise-extending narrow grooves 24 have inner ends in the tire width direction located in the tread and are formed to connect their outer ends in the width direction of the tire to the leading ends of the lug grooves 22. An outer end of each of the lug grooves 22 in the width direction of the tire extends beyond the tread end T to be able to discharge water outward in the width direction of the tire.

Further, equatorial shallow groove 26 extending in the circumferential direction of the tire is disposed on the tire equator CL. The width and the depth of the equatorial shallow groove 26 are adopted to those allowing the heat generation of the tire center portion C to be sufficiently suppressed during the period from a brand-new tire to the early stage of use where the heat generation of the tread portion 18 is considerable.

As described above, the tire 10 for a construction vehicle is provided with the equatorial shallow groove 26 extending in the circumferential direction on the tire equator, so that the compressive stress acting on the tire center portion C can be relaxed as well as the area for heat-radiation can be increased. Accordingly, the tire 10 for a construction vehicle can effectively suppress the temperature rise in the tread portion 18 during the rotation of the tire under load and thus can prevent the cause of a tire trouble such as heat separation.

Moreover, at least the inner ends of the plurality of widthwise-extending narrow grooves 24 in the width direction of the tire disposed in the tire center portion C are located within the tread. This can avoid a decrease of the of the land portion and, as a result, a tire having an improved wear resistance and a superior traction characteristic can be provided. Additionally, it is possible enhance the heat-radiation characteristic by increasing the number of the widthwise-extending narrow grooves 24 or by disposing the widthwise-extending narrow grooves 24 at the position spaced from the lug grooves 22 where the temperature is maximized.

Further, the width of the widthwise-extending narrow groove 24 is within a range from 4 mm to 20 mm, and the groove depth of the widthwise-extending narrow groove 24 is within a range from 50% to 95% of the groove depth of the lug groove 22. Such configuration may sufficiently exert the effect of enhancing the heat-radiation characteristic as well as to prevent the block rigidity of the tire center portion C from being too low.

Furthermore, the groove width of the equatorial shallow groove 26 is within a range from 30 mm to 50 mm. Such configuration may sufficiently exert the effect of relaxing the compressive stress acting on the tire center portion C during the rotation of the tire under load as well as to prevent the trouble at the belt ends due to an excessive decrease of the grounding area of the tire center portion C.

In addition, the groove depth of the equatorial shallow groove 26 is within a range from 10% to 25% of the groove depth of the lug groove 22. Such configuration may obtain a sufficient heat-radiation effect as well as to thoroughly prevent a deterioration of the wear resistance due to a decrease of the tread volume.

Also, the negative rate in the region extending over 25% of the tread width with the tire equator CL being its center except for the equatorial shallow groove 26 is within a range from 2% to 8%. Such configuration may effectively reduce the heat generation without decreasing the wear resistance of the tire center portion. It is noted that the tread width refers to a distance between the tread ends T located in the both side in the width direction of the tire.

### [Second Embodiment]

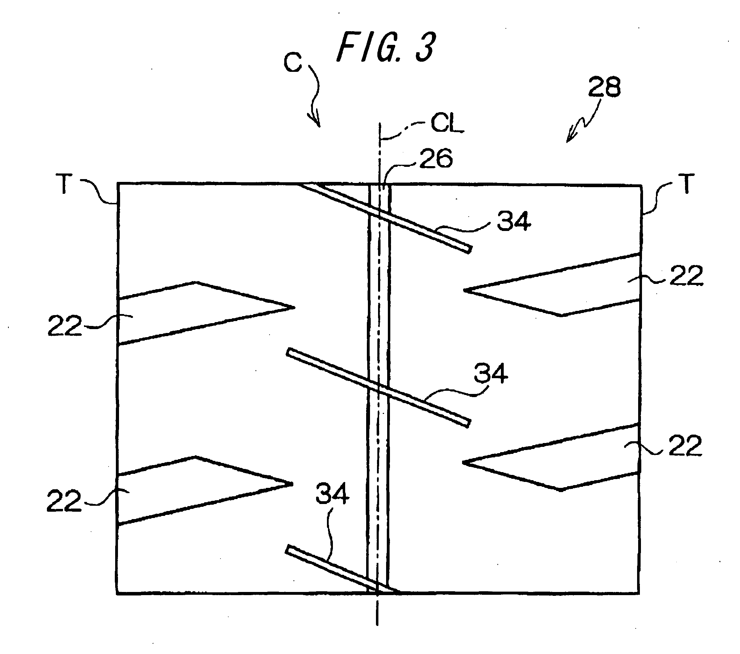

In the next, the second embodiment will be discussed. In a tire for a construction vehicle according to the present embodiment, widthwise-extending narrow grooves 34 instead of the widthwise narrow grooves 24 of the first embodiment are formed in the tread portion 28, as shown in FIG. 3.

The widthwise-extending grooves 34 are displaced in the tire center portion C generally along the width direction of the tire. The widthwise-extending narrow grooves 34 pass across the equatorial shallow groove 26, and both of their ends locate in the tread and do not connect with the lug grooves 22.

Such configuration may provide a tire for a construction vehicle useful for users demanding a large traction force which may cause a crack if the widthwise-extending narrow grooves are adopted to be connected to the lug grooves in the same manner as the first embodiment since deformations of the widthwise-extending narrow grooves and the lug grooves traction forces differs with each other to lead a stress concentration at the connection.

### [Third Embodiment]

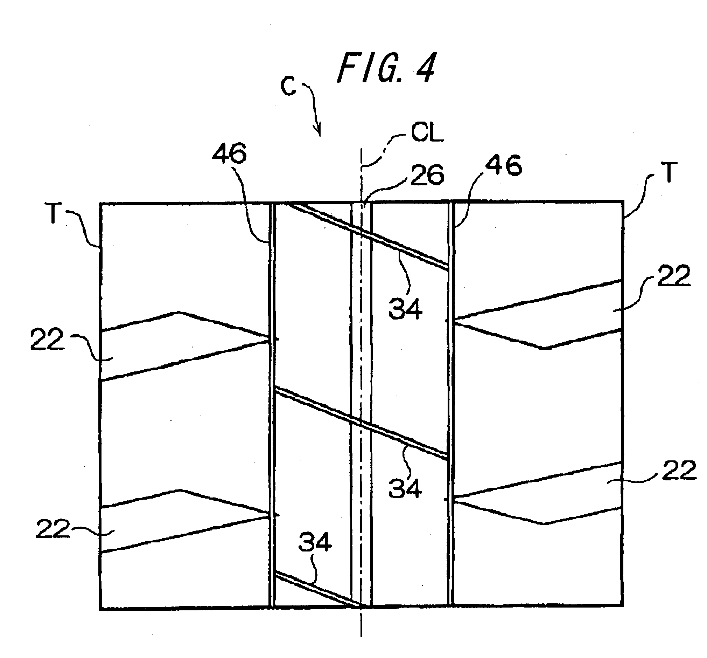

In the next, the third embodiment will be discussed. In a tire for a construction vehicle according to the present embodiment, two non-equatorial narrow grooves 46 extending in the circumferential direction of the tire are disposed along two lines connecting terminal ends of the lug grooves 22 in the circumferential direction of the tire, as shown in FIG. 4, in addition to the first embodiment. The groove depth of the non-equatorial narrow groove 46 is within a range from 10% to 25% of the groove depth of the lug groove 22. Both ends of the widthwise-extending narrow groove 34 is connected to the non-equatorial narrow groove 46.

This embodiment may avoid sideslips and degradation of the rigidity in the width direction.

### [Forth Embodiment]

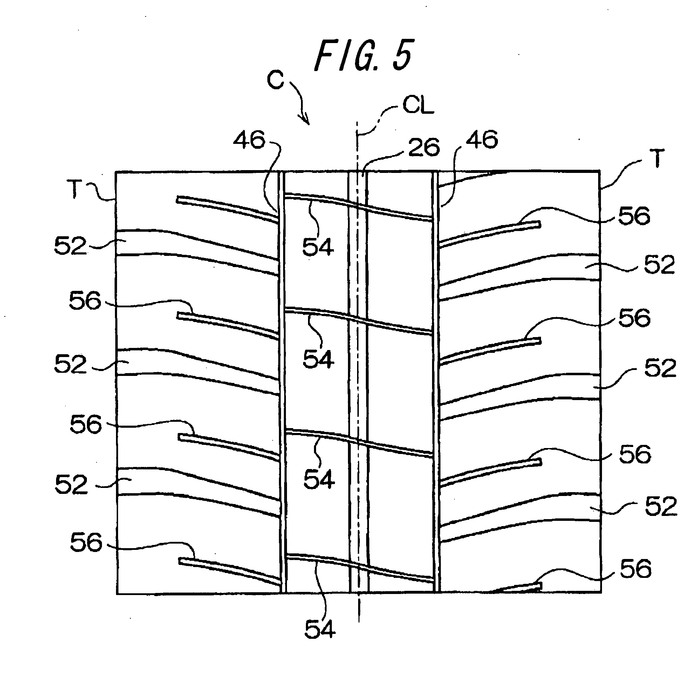

In the next, the forth embodiment will be discussed. In a tire for a construction vehicle according to the present embodiment, non-equatorial narrow grooves 46 are disposed in the same manner as in the third embodiment, as shown in FIG. 5. An equatorial shallow groove 26 is also provided.

In this embodiment, lug grooves 52 have a shape different from that of the lug grooves 22 of the third embodiment. The nearer the lug groove 52 approaches the non-equatorial narrow groove 46, the narrower its groove width is. The terminal ends of the lug groove 52 are connected to the non-equatorial narrow groove 46.

In place of the widthwise-extending narrow groove 34 described with reference to the third embodiment, widthwise-extending narrow grooves 54 are formed in the tire center portion C. Both ends of the widthwise-extending narrow groove 54 are connected to the non-equatorial narrow groove 46. The widthwise-extending narrow groove 54 is formed as a curved groove which has an incline angle with respect to the width direction of the tire gradually decreasing as the narrow groove approaches the non-equatorial narrow groove. Such groove configuration may enhance the heat-radiation characteristics of the widthwise-extending narrow groove and the non-equatorial narrow groove without deteriorating the block rigidity since an intersection between the widthwise-extending narrow groove and the non-equatorial narrow groove forms an obtuse angle.

Further, a second widthwise-extending narrow groove 56 having an inner end connecting to the non-equatorial narrow groove 46 in the width direction of the tire are formed between the lug grooves 52 adjacent with each other in the circumferential direction of the tire.

This embodiment may suppress the decrease of the block rigidity to the minimum by means of the narrow grooves to assure anti-side slip and anti-traction direction characteristics.

### [Fifth Embodiment]

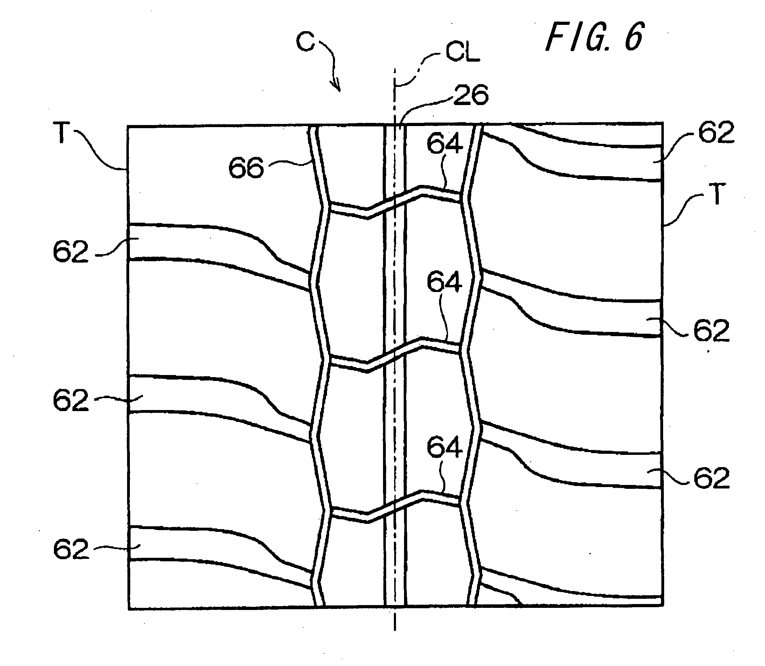

In the next, the fifth embodiment will be discussed. In a tire for a construction vehicle according to the present embodiment, non-equatorial narrow grooves 66 extending in the circumferential direction of the tire are formed in place of the non-equatorial narrow grooves 46 of the third embodiment, as shown in FIG. 6. An equatorial shallow groove 26 is also provided.

Lug grooves 62 have a shape different from that of the lug grooves 22 of the third embodiment. The nearer the lug groove 62 approaches the non-equatorial narrow groove 66, the narrower its groove width is. The terminal ends of the lug groove 62 are connected to the non-equatorial narrow groove 66.

In place of the widthwise-extending narrow groove 34 described with reference to the third embodiment, widthwise-extending narrow grooves 64 are formed in the tire center portion C. Both ends of the widthwise-extending narrow groove 64 are located in the tire equatorial side CL with respect to the inner end of the lug groove 62 in the width direction in the tire. As a result, the non-equatorial narrow groove extends in the circumferential direction in a zigzag manner. It is noted that extending in the circumferential direction in a zigzag manner means that groove portions inclined with respect to the circumferential direction of the tire are continued in the circumferential direction of the tire while being folded such that the incline direction thereof is altered.

This embodiment may lower the temperature of the overall tread since the narrow grooves extending in a zigzag shape enlarge the surface area. This is especially effective for a user who will use the tire at a high speed.

### <Test Example>

In order to confirm the effect of the present invention, the present inventor prepared one example of a pneumatic radial tire 10 according to the first embodiment (hereinafter referred to as Example tire) and one example of a pneumatic radial tire according to the conventional design (hereinafter referred to as Conventional Example tire) and evaluated their performances. Conventional Example tire has the same configuration as that of Example tire except that no circumferential narrow groove is formed in the tire center portion. The size of each tire was 40.00R57. The condition of each tire is shown in Table 1 (see FIG. 2 for details of GW, d, D and SW indicated in Table 1).

**[Table 1]**

| Tire under test | Conventional Example tire | Example tire |
|---|---|---|
| Width GW of equatorial shallow groove | 0 mm | 40 mm |
| Depth d of equatorial shallow groove | 0 mm | 12 mm |
| Depth D of the lug groove | 97 mm | 97 mm |
| Negative rate of tire center portion | 5% | 5% |
| Width SW of widthwise-extending narrow groove formed in tire center portion | 14 mm | 14 mm |
| (First result) Temperature | (reference temperature) | 4.9 deg. C lower than that of Conventional Example |
| (Second result) wear resistance index | 100 | 101 |

In the present test example, Conventional Example tire and Example tire were subjected to the following two kinds of tests. For each of the tire, the following tests were conducted after the tire was mounted on the TRA regular rim and regular load and regular inner pressure were applied thereto.

The term "regular rim" as used herein refers to the standard rim for an applied seize specified in, for example, YEAR BOOK 2004 Edition published by JATMA, and the term "regular load" and "regular inner pressure" refer to the maximum load and the air pressure for the maximum load at applied size and ply rating specified in YEAR BOOK 2004 Edition published by JATMA as well. Where the TRA standard or the ETRTO standard is adopted in the place of use or manufacturing, the above-mentioned definition follows such standard.

In the first test, the tires had been traveled for 24 hours, then thermocouples were inserted through fine holes formed at six places on the periphery of the block center portion in advance to measure the temperature at 5 mm above the outermost layer. The average of the temperatures at six places were calculated and the calculated results are shown in Table 1 as well. As appreciated from Table 1, the average temperature of Example tire is 4.9 deg. C lower than that of Conventional tire, which indicates a better heat-radiation characteristic.

In the second test, each tire was mounted on a front wheel of a 190-ton dumper truck and the truck was traveled at a generally constant speed of 10 km/h for 1,000 hours. Thereafter, the depths of a remaining groove were measured at eight points dividing the tread equally in the width direction, and the gauges necessary for the traveling were averaged to give the amount of wear. In addition, the amount of wear was divided by the traveling time to give a wear resistance value. For the evaluation of the characteristic, the evaluation for Conventional Example tire was expressed as an index of 100, and an index relatively expressing the evaluation for Example tire was calculated. The calculated indexes are also shown in Table 1. The larger index (wear resistance index) indicates the better characteristic. As appreciated from Table 1, Example tire has a larger wear resistance index than Conventional Example tire, so that the former has a better wear resistance characteristic than the latter.

In the above, the mode for carrying out the present invention has been described with reference to the embodiments, these embodiments are merely examples of the present invention, and can be variously modified within a scope which does not derive from the gist of the present invention. Further, the scope of the present invention is, of course, not limited by the above-described embodiments.

## Claims

1. A tire for a construction vehicle provided with a plurality of lug grooves (22) in tread shoulder regions located at the both sides in the width direction of the tire, wherein
an equatorial shallow groove (26) extends in the circumferential direction of the tire is disposed at least on the tire equator (CL), **characterized in that** a plurality of widthwise-extending narrow grooves (24) extending generally along the width direction of the tire are disposed in a tire center portion (c), at least one end of the each widthwise-extending narrow groove locates in the tread.

2. The tire for a construction vehicle according to claim 1, wherein the tire is further provided with non-equator narrow grooves (46) extending along each of the two straight lines circumferentially connecting the terminal end position of the lug grooves (22) in the tread.

3. The tire for a construction vehicle according to claim 1 or 2, wherein the width (SW) of the widthwise-extending narrow groove (24) is within a range from 4 mm to 20 mm.

4. The tire for a construction vehicle according to any one of claims 1 to 3, wherein the groove depth of the widthwise-extending narrow groove (24) is within a range from 50% to 95% of the groove depth (D) of the lug groove (22).

5. The tire for a construction vehicle according to any one of claims 1 to 4, wherein the groove width (GW) of the equatorial shallow groove (26) is within a range from 30 mm to 50 mm.

6. The tire for a construction vehicle according to any one of claims 1 to 5, wherein the groove depth (d) of the equatorial shallow groove (26) is within a range from 10% to 25% of the groove depth (D) of the lug groove (22).

7. The tire for a construction vehicle according to any one of claims 1 to 6, wherein the negative rate in the region extending over 25% of the tread width with the tire equator being its center except for the equatorial shallow groove is within a range from 2% to 8%.

8. The tire for a construction vehicle according to any one of claims 2 to 7, wherein the widthwise-extending narrow groove is a curved groove (54) which has an incline angle with respect to the width direction of the tire gradually decreasing as the narrow groove approaches the non-equatorial narrow groove (46).

9. The tire for a construction vehicle according to any one of claims 2 to 7, wherein the widthwise-extending narrow groove is a zigzag-shaped groove (64) having an incline angle with respect to the width direction of the tire which is smaller at the vicinity of the non-equatorial narrow groove (66) than at the vicinity of the equatorial plane of the tire.

10. The tire for a construction vehicle according to any one of claims 2 to 9, wherein both ends of the widthwise-extending narrow groove (34) locate in the tire equatorial plane side with respect to the inner ends of the lug groove (22) as viewed in the width direction of the tire, and are connected to the non-equatorial narrow grooves (46).

## Patentansprüche

1. Reifen für ein Baufahrzeug, der mit einer Vielzahl von Stollenrillen (22) in den Laufflächenschulterbereichen versehen ist, die sich auf beiden Seiten in der Breitenrichtung des Reifens befinden, wobei
eine äquatoriale flache Rille (26), die sich in der Umfangsrichtung des Reifens erstreckt, mindestens am Reifenäquator (CL) angeordnet ist,
**dadurch gekennzeichnet, dass**
eine Vielzahl von sich in der Breitenrichtung erstreckenden schmalen Rillen (24), die sich im Allgemeinen längs der Breitenrichtung des Reifens erstrecken, in einem Reifenmittelabschnitt (C) angeordnet sind, wobei sich mindestens ein Ende einer jeden sich in der Breitenrichtung erstreckenden schmalen Rille in der Lauffläche befindet.

2. Reifen für ein Baufahrzeug nach Anspruch 1, bei dem der Reifen außerdem mit nichtäquatorialen schmalen Rillen (46) versehen ist, die sich längs einer jeden der zwei geraden Linien erstrecken, die peripher die Abschlussendposition der Stollenrillen (22) in der Lauffläche verbinden.

3. Reifen für ein Baufahrzeug nach Anspruch 1 oder 2, bei dem die Breite (SW) der sich in der Breitenrichtung erstreckenden schmalen Rille (24) innerhalb eines Bereiches von 4 mm bis 20 mm liegt.

4. Reifen für ein Baufahrzeug nach einem der Ansprüche 1 bis 3, bei dem die Rillentiefe der sich in der Breitenrichtung erstreckenden schmalen Rille (24) innerhalb eines Bereiches von 50 % bis 95 % der Rillentiefe (D) der Stollenrille (22) liegt.

5. Reifen für ein Baufahrzeug nach einem der Ansprüche 1 bis 4, bei dem die Rillenbreite (GW) der äquatorialen flachen Rille (26) innerhalb eines Bereiches von 30 mm bis 50 mm liegt.

6. Reifen für ein Baufahrzeug nach einem der Ansprüche 1 bis 5, bei dem die Rillentiefe (d) der äquatorialen flachen Rille (26) innerhalb eines Bereiches von 10 % bis 25 % der Rillentiefe (D) der Stollenrille (22) liegt.

7. Reifen für ein Baufahrzeug nach einem der Ansprüche 1 bis 6, bei dem die negative Rate in dem Bereich, der sich über 25 % der Laufflächenbreite erstreckt, wobei der Reifenäquator seine Mitte ist, abgesehen von der äquatorialen flachen Rille, innerhalb eines Bereiches von 2 % bis 8 % liegt.

8. Reifen für ein Baufahrzeug nach einem der Ansprüche 2 bis 7, bei dem die sich in der Breitenrichtung erstreckende schmale Rille eine gebogene Rille (54) ist, die einen Neigungswinkel mit Bezugnahme auf die Breitenrichtung des Reifens aufweist, der sich allmählich verkleinert, während sich die schmale Rille der nichtäquatorialen schmalen Rille (46) nähert.

9. Reifen für ein Baufahrzeug nach einem der Ansprüche 2 bis 7, bei dem die sich in der Breitenrichtung erstreckende schmale Rille eine zickzackartige Rille (64) ist, die einen Neigungswinkel mit Bezugnahme auf die Breitenrichtung des Reifens aufweist, der in der Nähe der nichtäquatorialen schmalen Rille (66) kleiner ist als in der Nähe der Äquatorebene des Reifens.

10. Reifen für ein Baufahrzeug nach einem der Ansprüche 2 bis 9, bei dem sich beide Enden der sich in der Breitenrichtung erstreckenden schmalen Rille (34) in der Seite der Reifenäquatorebene mit Bezugnahme auf die inneren Enden der Stollenrille (22) befinden, wenn in der Breitenrichtung des Reifens betrachtet wird, und mit den nichtäquatorialen schmalen Rillen (46) verbunden sind.

## Revendications

1. Bandage pneumatique pour engin de chantier, comportant plusieurs rainures à barrettes (22) dans des régions d'épaulement de la bande de roulement agencées au niveau des deux côtés dans la direction de la largeur du bandage pneumatique, dans lequel
une rainure équatoriale peu profonde (26), s'étendant dans la direction circonférentielle du bandage pneumatique, est agencée au moins sur le plan équatorial du bandage pneumatique (CL) ; **caractérisé en ce que**
plusieurs rainures étroites s'étendant dans le sens de la largeur (24), en général le long de la direction de la largeur du bandage pneumatique, sont agencées dans une partie centrale (c) du bandage pneumatique, au moins une extrémité de chaque rainure étroite s'étendant dans le sens de la largeur étant agencée dans la bande de roulement.

2. Bandage pneumatique pour engin de chantier selon la revendication 1, dans lequel le bandage pneumatique comporte en outre des rainures étroites non équatoriales (46), s'étendant le long de chacune de deux lignes droites connectant de manière circonférentielle la position d'extrémité terminale des rainures à barrettes (22) dans la bande de roulement.

3. Bandage pneumatique pour engin de chantier selon les revendications 1 ou 2, dans lequel la largeur (SW) de la rainure étroite s'étendant dans le sens de la largeur (24) est comprise dans un intervalle allant de 4 mm à 20 mm.

4. Bandage pneumatique pour engin de chantier selon l'une quelconque des revendications 1 à 3, dans lequel la profondeur de rainure de la rainure étroite s'étendant dans le sens de la largeur (24) est comprise dans un intervalle représentant 50% à 95% de la profondeur de rainure (D) de la rainure à barrettes (22).

5. Bandage pneumatique pour engin de chantier selon l'une quelconque des revendications 1 à 4, dans lequel la largeur de rainure (GW) de la rainure équatorial étroite (26) est comprise dans un intervalle allant de 30 mm à 50 mm.

6. Bandage pneumatique pour engin de chantier selon l'une quelconque des revendications 1 à 5, dans lequel la profondeur de rainure (d) de la rainure équatoriale étroite (26) est comprise dans un intervalle représentant 10% à 25% de la profondeur de rainure (D) de la rainure à barrettes (22).

7. Bandage pneumatique pour engin de chantier selon l'une quelconque des revendications 1 à 6, dans lequel le taux négatif dans la région s'étendant au-delà de 25% de la largeur de la bande de roulement, le plan équatorial du bandage pneumatique constituant son centre, à l'exception de la rainure équatoriale étroite, est compris dans un intervalle allant de 2% à 8%.

8. Bandage pneumatique pour engin de chantier selon l'une quelconque des revendications 2 à 7, dans lequel la rainure étroite s'étendant dans le sens de la largeur est une rainure courbée (54), formant un angle d'inclinaison par rapport à la direction de la largeur du bandage pneumatique, qui est réduit progressivement à mesure que la rainure étroite s'approche de la rainure étroite non équatoriale (46).

9. Bandage pneumatique pour engin de chantier selon l'une quelconque des revendications 2 à 7, dans lequel la rainure étroite s'étendant dans le sens de la largeur est une rainure en zigzag (64), formant un angle d'inclinaison par rapport à la direction de la largeur du bandage pneumatique, qui est plus petit au niveau du voisinage de la rainure étroite non équatoriale (66) qu'au voisinage du plan équatorial du bandage pneumatique.

10. Bandage pneumatique pour engin de chantier selon l'une quelconque des revendications 2 à 9, dans lequel les deux extrémités de la rainure étroite s'étendant dans le sens de la largeur (54) se situent dans le côté du plan équatorial du bandage pneumatique par rapport aux extrémités internes de la rainure à barrettes (22), vues dans la direction de la largeur du bandage pneumatique, et sont connectées aux rainures étroites non équatoriales (46).
